# EUROPEAN PATENT SPECIFICATION

(11) **EP 4 493 438 B1**
(45) Date of publication and mention of the grant of the patent: **15.04.2026**
(21) Application number: 23717239.0
(22) Date of filing: 16.03.2023
(51) Int. Cl.: B60T 17/22, B61H 1/00, B60T 13/66

(54) **ELECTRONIC BRAKING INDICATION SYSTEM FOR AT LEAST ONE VEHICLE, PARTICULARLY AT LEAST ONE RAILWAY VEHICLE**
ELEKTRONISCHES BREMSANZEIGESYSTEM FÜR MINDESTENS EIN FAHRZEUG, INSBESONDERE MINDESTENS EIN SCHIENENFAHRZEUG
SYSTÈME ÉLECTRONIQUE D'INDICATION DE FREINAGE POUR AU MOINS UN VÉHICULE, NOTAMMENT AU MOINS UN VÉHICULE FERROVIAIRE

(30) Priority: 18.03.2022 IT 202200005372
(43) Date of publication of application: 22.01.2025
(73) Proprietor: Faiveley Transport Italia S.p.A., 10045 Piossasco (TO) (IT)
(72) Inventor: FREA, Matteo, 10060 Cantalupa (Torino) (IT); BONHOMME, Guillaume, 80000 Amiens (FR)
(74) Representative: Cristinelli, Luca
(86) International application number: PCT/IB2023/052560
(87) International publication number: WO 2023/175547

(56) References cited:
- DE-A1- 1 951 104
- DE-B- 1 282 052
- DE-U- 7 129 540
- US-A1- 2016 076 956

## Description

### Technical field

The present invention relates, in general, to the field of vehicles, for example railway vehicles; in particular, the invention relates to an electronic braking indication system for at least one vehicle and to a vehicle comprising such an electronic braking indication system.

### Prior art

The prior art will be described below with particular reference to the field of railway vehicles. Nevertheless, that which is described in the following may also apply, where possible, to vehicles in other fields.

Railway vehicles, whether intended for the transport of passengers or goods, usually have a pneumatic or electro-pneumatic braking system.

This braking system comprises a brake pipe designed to convey a pressurized fluid and auxiliary tanks for storing the compressed air.

Various pneumatic or electro-pneumatic actuators installed along the vehicle are arranged to receive this fluid, through respective pipes, and convert (in some cases even regulate) said pressure into a braking force to be applied on one or more disc-pad and/or wheel-shoe couplings.

For multiple reasons of safety and/or to support the monitoring of rolling stock, it is necessary to provide the vehicle with a system that allows the state of application of the brake to be visually checked, as required for example by the European standard EN 15220.

For example, for safety reasons, it is necessary to verify that, if the driver has commanded the release of the braking, the braking has actually been released by all the pneumatic or electro-pneumatic actuators. Failure to release the braking by a pneumatic or electro-pneumatic actuator could lead to dragging of the wheel(s) associated with this actuator, with consequent damage to the rolling stock and infrastructure and risk of derailment for the vehicle.

To carry out such a check, known vehicles include braking indicators installed on the vehicle so as to be visible from outside the vehicle.

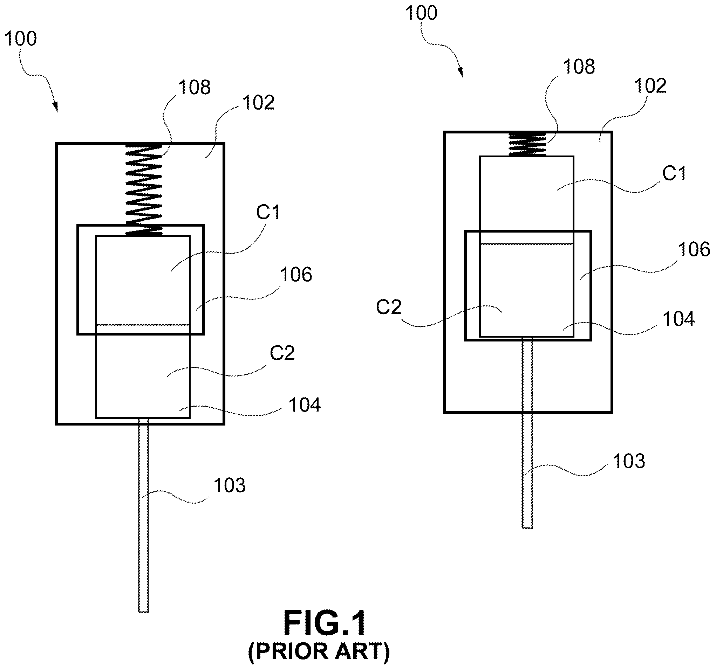

An example of a braking indicator 100 according to the prior art is illustrated in Figure 1.

In particular, the left side of Figure 1 shows the braking indicator in a condition of braking released and the right side of Figure 1 shows the braking indicator in a condition of applied braking.

Each braking indicator is associated with one or more pneumatic or electro-pneumatic actuators and comprises a substantially box-shaped structure 102.

Inside the structure 102, there is a plate 104 which is divided into two colors C1 and C2, for example green and red.

The box-shaped structure comprises an opening 106 through which a portion of the plate 104 can be viewed.

Looking at the left side of Figure 1, when the braking force is released, i.e. the pressure of the braking fluid 103 is below a predetermined threshold, a predetermined elastic element 108 associated with the plate 104 will keep the plate in a position such that the opening 106 of the box-shaped structure 102 shows the plate portion having the color C1, i.e. green.

Looking at the right side of Figure 1, when the braking force is applied, i.e. the pressure of the braking fluid is greater than a predetermined threshold, the predetermined elastic element 108 associated with the plate 104 will be compressed so that the plate 104 will be in such a position that the opening 106 of the box-shaped structure will show the plate portion having the color C2, i.e. red.

When the vehicle is for example in a station or marshaling yard, before departure, the driver will be able to release the braking. Once the braking release command has been given, an operator positioned outside the vehicle will take care of viewing all the braking indicators 100 and checking that the color C1, i.e. green, indicative of the occurred release of the braking by the respective pneumatic or electro-pneumatic actuator(s), can be seen from the respective openings 106. If there is a braking indicator 100 which shows the color C2, i.e. red, from the opening 106, the operator will signal that a pneumatic or electro-pneumatic actuator has remained blocked in a braking condition or that it will in any case signal the presence of an anomaly.

Today, the rail vehicle industry is experiencing a transition from pneumatic/electro-pneumatic braking systems to electromechanical braking systems.

Disadvantageously, the braking indicators 100 that were used for pneumatic/electro-pneumatic braking systems cannot be used for electromechanical braking systems. This is due to the fact that the operation of the braking indicators 101 of the pneumatic or electro-pneumatic braking systems was based on the monitoring of a pressure value of the braking fluid, which is no longer present for electromechanical braking systems.

Examples of brake indication systems are provided in documents US 2016/076956 A1, DE 19 51 104 A1, DE 71 29 540 U or DE 12 82052 B.

### Summary of the invention

An object of the present invention is therefore to provide a solution, for electromechanical braking systems, which produces visual information of the state of application of the brake. The above and other objects and advantages are achieved, according to one aspect of the invention, by an electronic braking indication system for at least one vehicle, particularly at least one railway vehicle, having the features defined in the respective independent claims 1 or 2, and by a vehicle having the features defined in claim 15. Preferred embodiments of the invention are defined in the dependent claims, the content of which is to be understood as an integral part of the present description.

### Brief description of the drawings

The functional and structural features of some preferred embodiments of an electronic braking indication system for at least one vehicle, particularly at least one railway vehicle, and of a vehicle according to the invention, will now be described. Reference is made to the accompanying drawings, wherein:
- Fig. 1 illustrates a braking indicator according to the prior art;
- Fig. 2 illustrates an embodiment of an electronic braking indication system for at least one vehicle, particularly a railway vehicle, according to this invention;
- Fig. 3 illustrates an exemplary explanatory graph of the operation of the system showing an electronic braking indication system for at least one vehicle when only a first threshold is present;
- Fig. 4 illustrates an exemplary explanatory graph of the operation of the system showing an electronic braking indication system for at least one vehicle when a first threshold and a second threshold are present;
- Fig. 5 illustrates a further embodiment of an electronic braking indication system for at least one vehicle, particularly a railway vehicle, according to this invention;
- Fig. 6 illustrates an even further embodiment of an electronic braking indication system for at least one vehicle, particularly a railway vehicle, according to this invention;
- Fig. 7 illustrates an electromechanical actuator according to the prior art.

### Detailed description

Before explaining in detail a plurality of embodiments of the invention, it should be clarified that the invention is not limited in its application to the design details and configuration of the components presented in the following description or illustrated in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

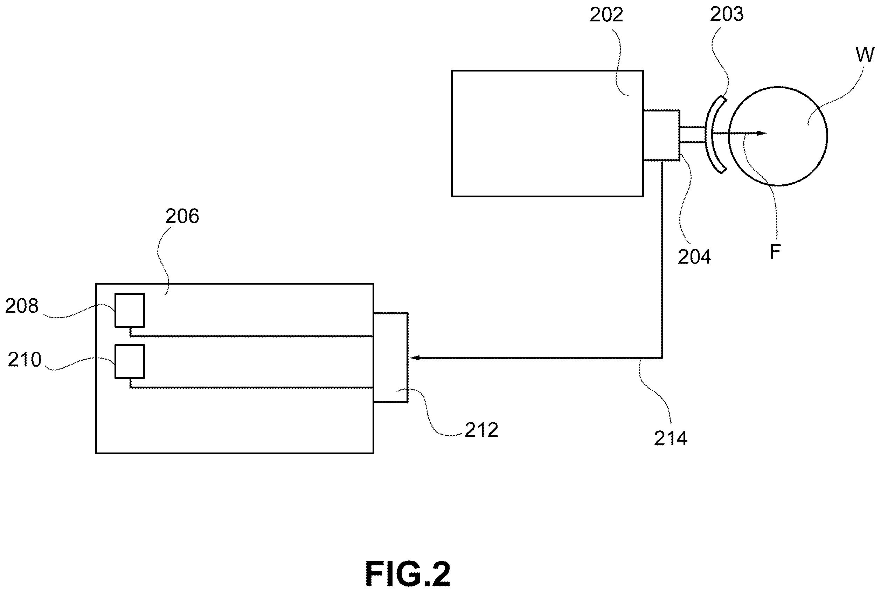

Referring initially to Fig. 2, an embodiment of an electronic braking indication system for at least one vehicle, particularly a railway vehicle, is shown.

The vehicle comprises at least one electromechanical actuator 202 arranged to apply a braking force F to at least one wheel W of the vehicle or to at least one braking element associated with at least one wheel W of the vehicle or an axle to which at least one wheel W of the vehicle is mounted.

For example, the braking element, when associated with at least one wheel W of the vehicle, may be a disc brake mounted to the wheel. For example, the at least one braking element, when associated with the axle to which the at least one wheel W is mounted, may be a disc brake mounted to the axle.

For example, the at least one electromechanical actuator 202, for applying the braking force F, may comprise braking force application means 203, such as, for example, a braking shoe, disc brake calipers, etc.

The electronic braking indication system comprises at least one force sensor means 204 arranged to measure a value of said braking force F applied by said at least one electromechanical actuator 202.

The value of said braking force may be for example the instantaneous value of the force of said applied braking force F.

The electronic braking indication system further comprises at least one electronic visual signaling device 206, comprising at least one first electronic light source 208 and at least one second electronic light source 210.

Moreover, the electronic braking indication system comprises at least one control means 212 arranged to receive the measured value of said braking force F.

For example, the at least one control means 212 may be or comprise at least one of a microprocessor, a processor, a microcontroller, a controller, a PLC, an FPGA, or the like.

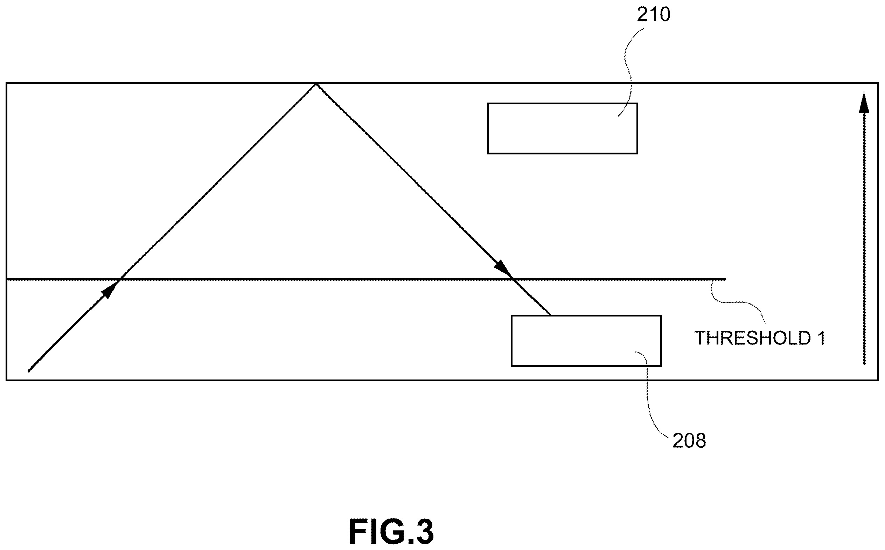

In a first embodiment, the at least one control means is arranged to:
a) switch on said first light source 208 when said measured value of the braking force F is lower than a first threshold (indicated in Fig. 3 as THRESHOLD 1);
b) switch on said second light source 210 when said measured value of the braking force F is greater than said first threshold (THRESHOLD 1).

Fig. 3 illustrates an exemplary explanatory graph of the operation of the system showing an electronic braking indication system for at least one vehicle when only a first threshold, i.e. THRESHOLD 1, is present.

When said measured value of the braking force F is equal to the first threshold, the following control strategies may be applied interchangeably:
- the control means 212 is arranged to switch on said first light source 208; or
- the control means 212 is arranged to switch on said second light source 210.

Or, when the measured value of the braking force F is equal to the first threshold, the control means 212 may be arranged to keep on the light source 208, 210 which was switched on before the first threshold THRESHOLD 1 was reached.

In a second embodiment, as for the previous embodiment, the electronic braking indication system for at least one vehicle, particularly at least one railway vehicle, comprises at least one force sensor means 204 arranged to measure a value of said braking force F applied by said at least one electromechanical actuator 202, at least one electronic visual signaling device 206 comprising at least one first electronic light source 208 and at least one second electronic light source 210.

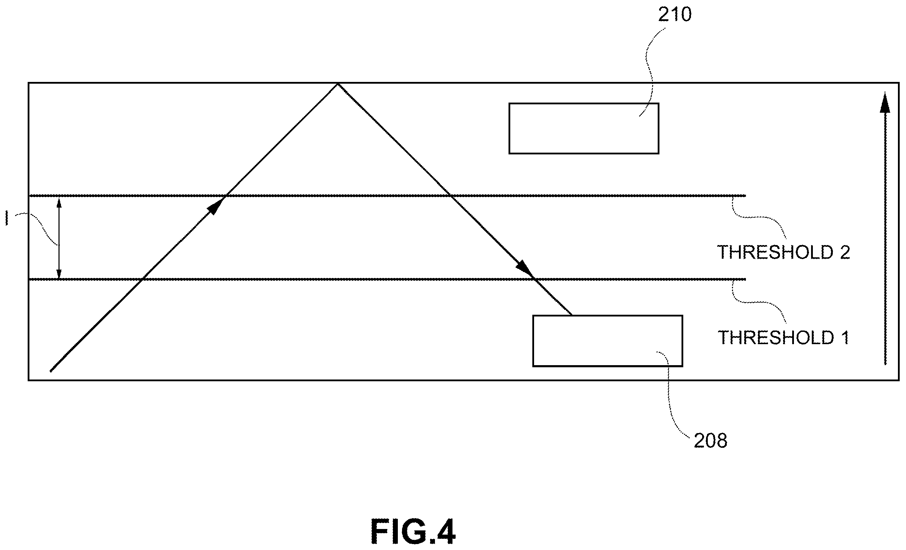

Unlike the first embodiment, the at least one control means 212 is arranged to receive the measured value of said braking force F and:
a) switch on said first electronic light source 208 when said measured value of the braking force F is lower than or equal to a first threshold (indicated in Fig. 4 as THRESHOLD 1);
b) switch on said second electronic light source 210 when said measured value of the braking force F is greater than or equal to a second threshold (indicated in Fig. 4 as THRESHOLD 2) different from said first threshold.

Preferably, when both the first threshold and the second threshold are present, the second threshold can be greater than said first threshold.

Fig. 4 illustrates an exemplary explanatory graph of the operation of the system showing an electronic braking indication system for at least one vehicle when a first threshold and a second threshold are present. With reference to Fig. 4, a range of hysteresis values I can be created between the first threshold (THRESHOLD 1) and the second threshold (THRESHOLD 2).

In the hysteresis band, the light source 208, 210 which was switched on before entering the hysteresis value range I can remain on. In other words, if the measured braking force F is decreasing, but had exceeded the second threshold (THRESHOLD 2) which led to the switching on of the second electronic light source 210, the at least one control means 212 will be able to keep the second electronic light source 210 switched on until the measured braking force F has reached or has fallen below the first threshold (THRESHOLD 1). Conversely, if the measured braking force F is increasing, but had fallen below the first threshold (THRESHOLD 1) which led to the switching on of the first electronic light source 208, the at least one control means 212 will be able to keep the first electronic light source 208 switched on until the measured braking force F has reached or exceeded the first threshold (THRESHOLD 1).

For all embodiments described, the at least one control means 212 could preferably be comprised in the at least electromechanical actuator. In such a case, the control means 212 may be the control means usually installed in an electromechanical actuator for controlling its actuation. Or, the at least one control means 212 may be a further suitable control means included in the electromechanical actuator.

When a plurality of electromechanical actuators are present, each of them may comprise a respective control means. In this case, there may be a plurality of control means 212, and a plurality of first electronic light sources 208 and second electronic light sources 210. Each control means will be able to control the switching on of at least one respective first electronic light source 208 and of at least one respective second electronic light source 210.

Alternatively, preferably, the at least one control means 212 may be included in the electronic visual signaling device 206 or be associated with the electronic visual signaling device 206. For example, in this case, a single control means may be sufficient even in the case of a plurality of electromechanical actuators. The single control means of the electronic braking indication system will be able to receive a plurality of braking force F values applied by the plurality of electromechanical actuators and control the switching on of all the first electronic light sources and of all the second electronic light sources.

When a plurality of electromechanical actuators are present, a plurality of force sensor means 204 may be present. Each of these may be arranged to measure a respective value of the braking force F applied by a respective electromechanical actuator.

Each force sensor means may comprise for example a force transducer or a force sensor.

When a plurality of first electronic light sources 208 and second electronic light sources 210 are present, they may be installed in a single electronic visual signaling device 206, or they may be divided into various electronic visual signaling devices.

Preferably, the at least one electronic visual signaling device 206 may be installed on the vehicle such that the at least one first electronic light source 208 and the at least one second electronic light source 210 are visible from outside the vehicle. In this way, when the vehicle is for example in a station, before departure, the driver will be able to release the braking. Once the braking release command has been given, an operator positioned outside the vehicle will take care of viewing all the first and second electronic light sources 208, 210 and checking that all the first electronic light sources 208 are on and that all second electronic light sources 210 are off (this condition being indicative of the occurred release of the braking by all the electromechanical actuators). If there is a second electronic light source 210 switched on, even when the braking release command has been given by the driver, the operator can signal that an electromechanical actuator has remained blocked in a braking condition or in any case he/she can signal the presence of an anomaly.

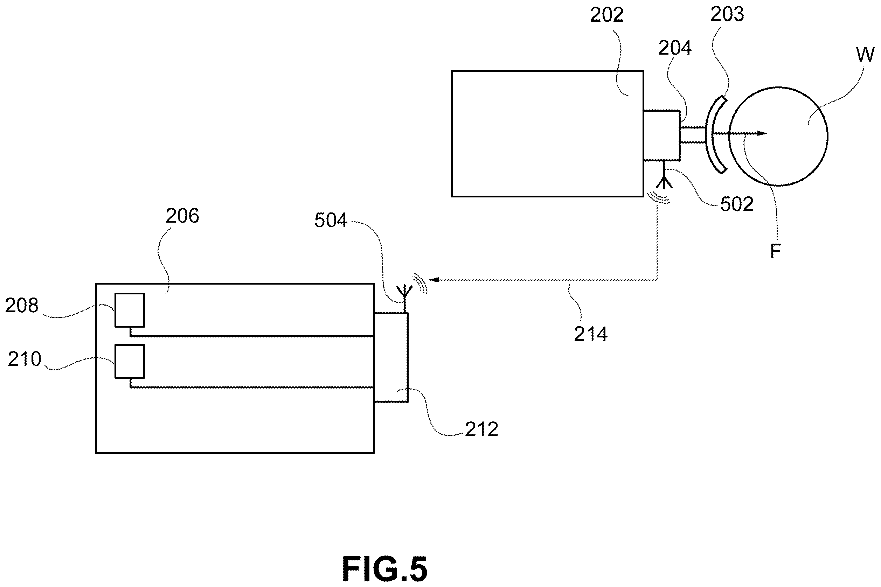

Preferably, the measured value of the braking force F may be provided by the at least one force sensor means 204 to the at least one control means 212 via a communication channel 214. For example, as can be seen in Fig. 5, the communication channel 214 may be a wireless communication channel.

In further embodiments, the communication channel 214 may be a hardwired channel.

The communication channel 214 may be based on the "black channel" protocol.

The communication channel 214 may be implemented according to a safety integrity level (SIL) greater than a predetermined minimum safety integrity level.

Preferably, as can be seen in Fig. 5, the electronic braking indication system for at least one vehicle may comprise a first communication means 502 associated with said at least one force sensor means 204. The first communication means may be arranged to allow the transmission/reception of signals on/from said communication channel 214. Furthermore, the electronic braking indication system for at least one vehicle may comprise a second communication means 504 associated with said at least one control means 212 and arranged to allow the transmission/reception of signals on/from said communication channel 214.

For example, the first communication means 502 and the second communication means 504 may each comprise at least one antenna.

Preferably, the first communication means 502 associated with said at least one force sensor means 204 may be arranged to transmit a first signal indicative of the measured value of the braking force F continuously over time or according to a predetermined transmission period T.

Preferably, when the vehicle is traveling at a speed lower than or equal to a predetermined speed, the first communication means 502 associated with said at least one force sensor means 204 may be arranged to transmit to the second communication means 504, via said communication channel 214, a first signal indicative of the value of the braking force F continuously over time or according to a predetermined transmission period T.

Preferably, the at least one control means 212, via the second communication means 504, will be able to send one or more signals indicative of the on/off status of the first electric light sources 208 and of the second electronic light sources 210 present to a remote control station or to an operator's user device. In this way, any maintenance required to repair any blocked or malfunctioning electromechanical actuator may be planned more easily by the staff of the remote station or by the operator provided with a user device.

Preferably, the at least one control means 212 may be arranged to switch off the at least one first electronic light source 208 and/or the at least one second electronic light source 210 when the vehicle has reached or exceeded a predetermined speed. Or, the at least one control means 212 may be arranged to prevent activation of said at least one first electronic light source 208 and/or said at least one second electronic light source 210 when the vehicle has reached or exceeded a predetermined speed.

In other words, when the vehicle is traveling along a section at a speed exceeding a predetermined threshold, it is not necessary for the at least one signaling device 206 to provide visual information regarding the release of the braking since there would be no operator capable to view them. To save energy, the at least one first electronic light source 208 and/or the at least one second electronic light source 210 can be kept off.

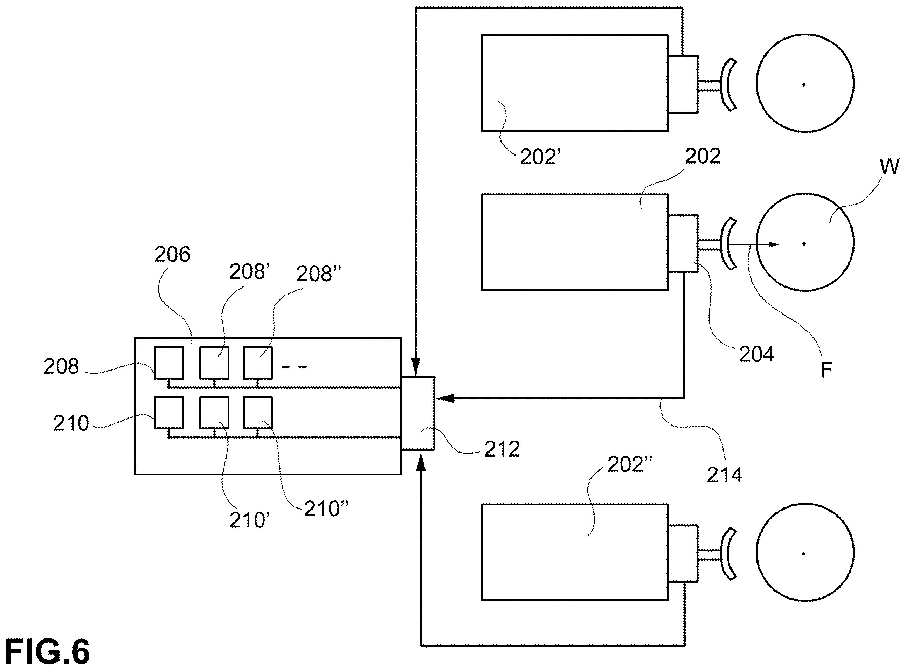

Preferably, as can be seen in Fig. 6, the at least one visual signaling device 206 may comprise respective first electronic light sources 208, 208', 208'' and second electronic light sources 210, 210', 210'' for each electromechanical actuator of the vehicle 202, 202', 202''.

For example, the various electronic light sources may be arranged in a checkerboard or matrix or vector arrangement.

Preferably, each first electronic light source 208 may comprise at least one LED and/or each second electronic light source 210 may comprise at least one LED.

In further embodiments, each first electronic light source 208 and/or each second electronic light source 210 may be made according to further technologies, for example incandescent bulbs, neon lamps, or the like.

Preferably, the at least one electronic visual signaling device 206 may comprise a circuit board on which the first electronic light source 208 and/or the second electronic light source 210 may be installed (also all the first electronic light sources 208 and/or all the second electronic light sources, when present, may be installed on said circuit board).

Preferably, the at least one electronic visual signaling device 206 may further comprise a logic circuit arranged to implement a predetermined control logic. In an example of control logic, the vehicle may comprise a plurality of electromechanical actuators 202, for example four electromechanical actuators arranged to apply respective braking forces F on four different wheels W of the vehicle or on four braking elements each associated with at least one wheel W of the vehicle or with four axles to which wheels are mounted. The four wheels, or four braking elements, or the four axles, may for example be included in the same bogie of the vehicle.

For each electromechanical actuator present, the at least one electronic visual signaling device 206 may comprise a respective first electronic light source 208 and a respective second electronic light source 210. In the present example, since there are four electromechanical actuators, the at least one electronic visual signaling device may comprise four first electronic light sources and four second electronic light sources. By means of the logic circuit, it is possible for example to allow the switching on of all the second electronic light sources when at least one control means commands the switching on of a second electronic light source because the electromechanical actuator (associated with this second electronic light source) has applied a braking force higher than the first threshold THRESHOLD 1 (or than the second threshold THRESHOLD 2, when present). This control logic allows, for example, for better identification of the bogie that is having a braking release problem due to its own electromechanical actuator.

Clearly, different control logics may also be implemented with respect to the one just described.

For example, the logic circuit may include one or more logic gates.

Alternatively, when a control means 212 is included in an electronic visual signaling device 206, it may itself be in charge of implementing a control logic.

Preferably, the electronic braking indication system may comprise a suitable battery arranged to supply electrical energy to the at least one electronic visual signaling device 206, to the at least one first electronic light source 208 (e.g. to each first electronic light source present) and to the at least one second electronic light source (e.g. to each second electronic light source present).

Or, the at least one electronic visual signaling device, the at least one first electronic light source (e.g. each first electronic light source present) and the at least one second electronic light source (e.g. each second electronic light source present) may be arranged to receive electrical energy directly from a battery of the vehicle.

An embodiment example of a possible electromechanical actuator is given below by way of example.

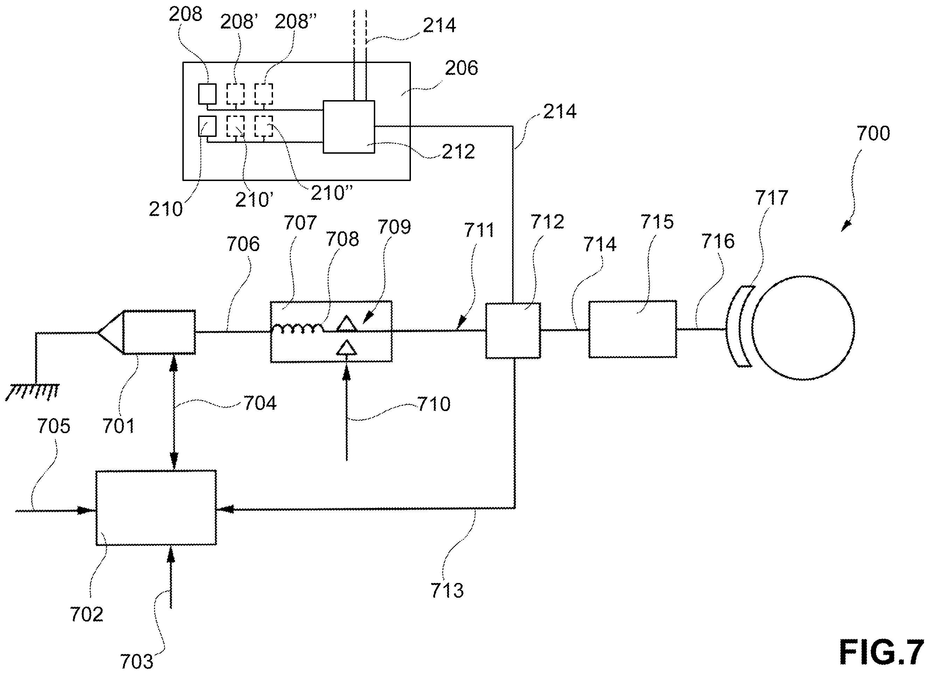

With reference to Fig. 7, an exemplary embodiment of an electromechanical braking actuator 700 according to the prior art is illustrated.

The electromechanical actuator may comprise a first electromechanical module 701 which may comprise at least one electric motor and possibly a speed reducer, i.e., torque multiplier, may extend or retract an arm 706 connected to an emergency braking module 707.

The emergency braking module 707 may comprise emergency braking energy storage means 708, for example a potential mechanical energy mechanical storage means. The mechanical means for storing potential mechanical energy is, by way of non-exclusive example, a helical spring. The emergency braking module 707 may further comprise emergency braking energy release means 709, for example an electromechanical retention mechanism, controlled by an emergency braking request signal 710. The emergency braking energy release means 709 may be arranged to have a first state in which they maintain the potential mechanical energy previously stored in the emergency braking energy storage means 708 when the emergency braking request signal 710 does not indicate a request for emergency braking. The emergency braking energy release means 709 are arranged to have a second state in which they release the potential mechanical energy previously stored in the emergency braking energy storage means 708 when the emergency braking request signal 710 indicates a request for emergency braking.

Other forms of mechanical energy storage may be used, such as, by way of non-exclusive example, a spring of the flat spiral type in case the transfer of forces is of the rotational rather than translational type.

Still further, the stored energy may be kinetic energy stored in a flywheel kept in adequate rotation by a second motor, not shown in the figure.

The force sensor 204 of the electronic braking indication system for at least one vehicle that is the object of the present invention may be constrained for example to an arm 711 (the force sensor is indicated with the reference numeral 712 in Fig. 7). The force sensor may generate an electrical signal 713 indicative of the braking force. This signal may be indicative of the mechanical force applied between the arms 711 and 714. The electrical signal 713, in addition to being supplied to the control means of the electronic braking indication system for at least one vehicle that is the object of the present invention, may be input to a control unit for the service braking 702.

An arm 714 may be connected between the force sensor means 712 and a backlash recuperator 715 which transmits the force to a last arm 716 connected to the pad holder plus brake pad assembly 717.

The backlash recuperator 715 has the purpose of continuously recuperating the wear of the braking pad.

The consumption of the pad may also be recuperated by means of software procedures carried out by the control unit, said procedures not being covered by this invention.

The service braking control unit 702, being electronic in nature, may receive at its input a power supply voltage 705 not exclusively originating from the battery of the vehicle.

The service braking control unit 702 may be arranged to modulate the supply voltage 705 to control the electric motor included in the electromechanical module 701 through at least one electric control signal 704.

The service braking control unit 702 may receive an input signal indicating a service braking force request 703 and may be arranged to apply a service braking force corresponding to said service braking force request 703, controlling the electromechanical module 701 to extend the arm 706 until the electrical signal 713 indicative of braking force indicates that the braking force corresponding to the service braking force request 703 has been reached.

It is known that the connection sequence in which the modules 701, 707, 712, 715 are connected may change according to design and manufacturing expedience.

The previously described electromechanical actuator 700 has been provided only by way of example and is only one of the possible electromechanical actuators with which the electronic braking indication system for at least one vehicle that is the object of the present invention may be associated. The present invention is in fact applicable to any type of electromechanical actuator.

In the following, respective braking indication methods for at least one vehicle are described by way of example.

In a first example, the method comprises the steps of:
- measuring a value of braking force F applied by at least one electromechanical actuator of the vehicle 202 to at least one wheel W of the vehicle or to at least one braking element associated with at least one wheel W of the vehicle or an axle to which at least one wheel W is mounted;
- switching on a first electronic light source 208, e.g. of an electronic visual signaling device 206, when said measured value of the braking force F is lower than a first threshold (THRESHOLD 1);
- switching on a second electronic light source 210, e.g. of the electronic visual signaling device 206, when the measured value of the braking force F is greater than said first threshold (THRESHOLD 1).

In a second example, the method comprises the steps of:
- measuring a value of braking force F applied by at least one electromechanical actuator of the vehicle 202 to at least one wheel W of the vehicle or to at least one braking element associated with at least one wheel W of the vehicle or an axle to which at least one wheel W is mounted;
- switching on a first electronic light source 208, e.g. of an electronic visual signaling device 206, when said measured value of the braking force F is lower than or equal to a first threshold (THRESHOLD 1);
- switching on a second electronic light source 210, e.g. of the electronic visual signaling device 206, when said measured value of the braking force F is greater than or equal to a second threshold (THRESHOLD 2) different from said first threshold (THRESHOLD 1).

The aforesaid methods may be implemented by at least one control means or computer.

The embodiments described above for the electronic braking indication system for at least one vehicle, where possible, are also applicable to the methods described above by way of example.

Moreover, in a further aspect, the present invention relates to a vehicle.

The vehicle comprises at least one electromechanical actuator 202 arranged to apply a braking force F to at least one wheel W of the vehicle or to at least one braking element associated with at least one wheel W of the vehicle or an axle to which at least one wheel W of the vehicle is mounted. The vehicle further comprises an electronic braking indication system according to any one of the embodiments described above.

The present invention is applicable to at least one vehicle. Therefore, the present invention also applies to a plurality of vehicles, for example it may be applicable to a plurality of vehicles connected to each other to create a convoy, for example a convoy of railway vehicles.

As described above, the present invention is particularly applicable to the field of railway vehicles/trains that travel on railway tracks. For example, a vehicle referred to herein may be a locomotive or a wagon, and a route/section may include rails on which the wheels of the locomotive roll. The embodiments described herein are not intended to be limited to vehicles on tracks. For example, the vehicle may be a car, a truck (for example a highway semi-trailer truck, a mining truck, a truck for transporting timber or the like) or the like, and the route may be a road or a trail. For example, a train may comprise a plurality of such vehicles connected or associated with each other.

Various aspects and embodiments of an electronic braking indication system for at least one vehicle, particularly at least one railway vehicle, and of a vehicle according to the invention have been described. It is understood that each embodiment may be combined with any other embodiment. Moreover, the invention is not limited to the embodiments described, but may be varied within the scope defined by the appended claims.

## Claims

1. Electronic braking indication system for at least one vehicle, particularly at least one railway vehicle, wherein said vehicle comprises at least one electromechanical actuator (202) arranged to apply a braking force (F) to at least one wheel (W) of the vehicle or to at least one braking element associated with at least one wheel (W) of the vehicle or an axle to which at least one wheel (W) is mounted;
said electronic braking indication system comprising:
- at least one force sensor means (204) arranged to measure a value of said braking force (F) applied by said at least one electromechanical actuator (202);
- at least one electronic visual signaling device (206), comprising at least one first electronic light source (208) and at least one second electronic light source (210);
- at least one control means (212) arranged to receive the measured value of said braking force (F);
the electronic braking indication system **characterised in that** the at least one control means (212) is arranged to:
a) switch on said first electronic light source (208) when said measured value of the braking force (F) is lower than a first threshold (THRESHOLD 1);
b) switch on said second electronic light source (210) when said measured value of the braking force (F) is greater than said first threshold (THRESHOLD 1).

2. Electronic braking indication system for at least one vehicle, particularly at least one railway vehicle, wherein said vehicle comprises at least one electromechanical actuator (202) arranged to apply a braking force (F) to at least one wheel (W) of the vehicle or to at least one braking element associated with at least one wheel (W) of the vehicle or an axle to which at least one wheel (W) is mounted;
said electronic braking indication system comprising:
- at least one force sensor means (204) arranged to measure a value of said braking force (F) applied by said at least one electromechanical actuator (202);
- at least one electronic visual signaling device (206), comprising at least one first electronic light source (208) and at least one second electronic light source (210);
- at least one control means (212) arranged to receive the measured value of said braking force (F);
the electronic braking indication system **characterised in that** the at least one control means (212) is arranged to:
a) switch on said first electronic light source (208) when said measured value of the braking force (F) is lower than or equal to a first threshold (THRESHOLD 1);
b) switch on said second electronic light source (210) when said measured value of the braking force (F) is greater than or equal to a second threshold (THRESHOLD 2) different from said first threshold (THRESHOLD 1).

3. Electronic braking indication system according to claim 2, wherein said second threshold (THRESHOLD 2) is greater than said first threshold (THRESHOLD 1).

4. Electronic braking indication system according to any one of the preceding claims, wherein said at least one electronic visual signaling device (206) is arranged to be installed outside the vehicle, such that said at least one first electronic light source (208) and said at least one second electronic light source (210) are visible from outside the vehicle.

5. Electronic braking indication system according to any one of the preceding claims, wherein said measured value of the braking force (F) is provided by the at least one force sensor means (204) to the at least one control means (212) via a communication channel (214).

6. Electronic braking indication system according to claim 5, wherein said communication channel is a wireless communication channel.

7. Electronic braking indication system according to any one of claims 5 and 6, comprising:
- a first communication means (502) associated with said at least one force sensor means (204) and arranged to allow transmission/reception of signals on/from said communication channel (214);
- a second communication means (504) associated with said at least one control means (212) and arranged to allow transmission/reception of signals on/from said communication channel (214).

8. Electronic braking indication system according to claim 7, wherein said first communication means (502) associated with said at least one force sensor means (204) is arranged to transmit a first signal indicative of the measured value of the braking force (F) continuously over time or according to a predetermined transmission period.

9. Electronic braking indication system according to claim 7, wherein
when the vehicle is traveling at a speed lower than or equal to a predetermined speed, said first communication means (502) associated with said at least one force sensor means (204) is arranged to transmit to the second communication means (504), via said communication channel (214), a first signal indicative of the value of the braking force (F) continuously over time or according to a predetermined transmission period.

10. Electronic braking indication system according to any one of the preceding claims, wherein the at least one control means (212) is arranged to switch off said at least one first electronic light source (208) and/or said at least one second electronic light source (210) when the vehicle has reached or exceeded a predetermined speed,
or,
said at least one control means (212) is arranged to prevent activation of said at least one first electronic light source (208) and/or said at least one second electronic light source (210) when the vehicle has reached or exceeded a predetermined speed.

11. Electronic braking indication system according to any one of the preceding claims, wherein the at least one visual signaling device (206) comprises respective first electronic light sources (208') and second electronic light sources (210') for each electromechanical actuator (202') of the vehicle.

12. Electronic braking indication system according to any one of the preceding claims, wherein the at least one first electronic light source (208) comprises at least one LED and/or the at least one second electronic light source (210) comprises at least one LED.

13. Electronic braking indication system according to any one of the preceding claims, wherein the at least one electronic visual signaling device (206) comprises a circuit board on which the at least one first electronic light source (208) and/or the at least one second electronic light source (210) are installed.

14. Electronic braking indication system according to any one of the preceding claims, comprising a battery arranged to supply electrical energy to the at least one electronic visual signaling device, the at least one first electronic light source and the at least one second electronic light source,
or
wherein said electronic visual signaling device, the at least one first electronic light source and the at least one second electronic light source are arranged to receive electrical energy from a battery of the vehicle.

15. Vehicle comprising:
- at least one electromechanical actuator (202) arranged to apply a braking force (F) to at least one wheel (W) of the vehicle or to at least one braking element associated with at least one wheel (W) of the vehicle or an axle to which at least one wheel (W) is mounted;
- an electronic braking indication system according to any one of claims 1 to 14.

## Patentansprüche

1. Elektronisches Bremsanzeigesystem für mindestens ein Fahrzeug, insbesondere mindestens ein Schienenfahrzeug, wobei das Fahrzeug mindestens einen elektromechanischen Aktuator (202) umfasst, der eingerichtet ist, eine Bremskraft (F) auf mindestens ein Rad (W) des Fahrzeugs oder auf mindestens ein Bremselement, das mindestens einem Rad (W) des Fahrzeugs zugeordnet ist oder auf eine Achse, an der mindestens ein Rad (W) eingebaut wird, auszuüben;
wobei das elektronische Bremsanzeigesystem umfasst:
- mindestens ein Kraftsensormittel (204), das eingerichtet ist, einen Wert der Bremskraft (F) zu messen, die von dem mindestens einen elektromechanischen Aktuator (202) ausgeübt wird;
- mindestens eine elektronische visuelle Signalisierungsvorrichtung (206), umfassend mindestens eine erste elektronische Lichtquelle (208) und mindestens eine zweite elektronische Lichtquelle (210);
- mindestens ein Steuermittel (212), das eingerichtet ist, den gemessenen Wert der Bremskraft (F) zu empfangen;
wobei das elektronische Bremsanzeigesystem **dadurch gekennzeichnet ist, dass** das mindestens eine Steuermittel (212) eingerichtet ist, um:
a) die erste elektronische Lichtquelle (208) einzuschalten, wenn der gemessene Wert der Bremskraft (F) kleiner als ein erster Schwellenwert (SCHWELLENWERT 1) ist;
b) die zweite elektronische Lichtquelle (210) einzuschalten, wenn der gemessene Wert der Bremskraft (F) größer als der erste Schwellenwert (SCHWELLENWERT 1) ist.

2. Elektronisches Bremsanzeigesystem für mindestens ein Fahrzeug, insbesondere mindestens ein Schienenfahrzeug, wobei das Fahrzeug mindestens einen elektromechanischen Aktuator (202) umfasst, der eingerichtet ist, eine Bremskraft (F) auf mindestens ein Rad (W) des Fahrzeugs oder auf mindestens ein Bremselement, das mindestens einem Rad (W) des Fahrzeugs zugeordnet ist oder auf eine Achse, an der mindestens ein Rad (W) eingebaut wird, auszuüben;
das elektronische Bremsanzeigesystem umfassend:
- mindestens ein Kraftsensormittel (204), das eingerichtet ist, einen Wert der Bremskraft (F) zu messen, die von dem mindestens einen elektromechanischen Aktuator (202) ausgeübt wird;
- mindestens eine elektronische visuelle Signalisierungsvorrichtung (206), umfassend mindestens eine erste elektronische Lichtquelle (208) und mindestens eine zweite elektronische Lichtquelle (210);
- mindestens ein Steuermittel (212), das eingerichtet ist, den gemessenen Wert der Bremskraft (F) zu empfangen;
wobei das elektronische Bremsanzeigesystem **dadurch gekennzeichnet ist, dass** das mindestens eine Steuermittel (212) eingerichtet ist, um:
a) die erste elektronische Lichtquelle (208) einzuschalten, wenn der gemessene Wert der Bremskraft (F) kleiner als oder gleich einem ersten Schwellenwert (SCHWELLENWERT 1) ist;
b) die zweite elektronische Lichtquelle (210) einzuschalten, wenn der gemessene Wert der Bremskraft (F) größer als oder gleich einem zweiten Schwellenwert (SCHWELLENWERT 2) ist, der von dem ersten Schwellenwert (SCHWELLENWERT 1) verschieden ist.

3. Elektronisches Bremsanzeigesystem nach Anspruch 2, wobei der zweite Schwellenwert (SCHWELLENWERT 2) größer als der erste Schwellenwert (SCHWELLENWERT 1) ist.

4. Elektronisches Bremsanzeigesystem nach einem der vorhergehenden Ansprüche, wobei die mindestens eine elektronische visuelle Signalisierungsvorrichtung (206) eingerichtet ist, außerhalb des Fahrzeugs installiert zu werden, sodass die mindestens eine erste elektronische Lichtquelle (208) und die mindestens eine zweite elektronische Lichtquelle (210) von außerhalb des Fahrzeugs sichtbar sind.

5. Elektronisches Bremsanzeigesystem nach einem der vorhergehenden Ansprüche, wobei der gemessene Wert der Bremskraft (F) von dem mindestens einen Kraftsensormittel (204) über einen Kommunikationskanal (214) dem mindestens eine Steuermittel (212) bereitgestellt wird.

6. Elektronisches Bremsanzeigesystem nach Anspruch 5, wobei der Kommunikationskanal ein drahtloser Kommunikationskanal ist.

7. Elektronisches Bremsanzeigesystem nach einem der Ansprüche 5 und 6, umfassend:
- ein erstes Kommunikationsmittel (502), das dem mindestens einen Kraftsensormittel (204) zugeordnet ist und eingerichtet ist, die Sendung/den Empfang von Signalen auf/von dem Kommunikationskanal (214) zu ermöglichen;
- ein zweites Kommunikationsmittel (504), das dem mindestens einen Steuermittel (212) zugeordnet ist und eingerichtet ist, die Sendung/den Empfang von Signalen auf/von dem Kommunikationskanal (214) zu ermöglichen.

8. Elektronisches Bremsanzeigesystem nach Anspruch 7, wobei das erste Kommunikationsmittel (502), das dem mindestens einen Kraftsensormittel (204) zugeordnet ist, eingerichtet ist, ein erstes Signal, das den gemessenen Wert der Bremskraft (F) anzeigt, kontinuierlich über die Zeit oder nach einer vorbestimmten Sendungsperiode zu senden.

9. Elektronisches Bremsanzeigesystem nach Anspruch 7, wobei,
wenn das Fahrzeug mit einer Geschwindigkeit kleiner als oder gleich einer vorbestimmten Geschwindigkeit fährt, das erste Kommunikationsmittel (502), das dem mindestens einen Kraftsensormittel (204) zugeordnet ist, eingerichtet ist, dem zweiten Kommunikationsmittel (504), über den Kommunikationskanal (214), ein erstes Signal, das den Wert der Bremskraft (F) anzeigt, kontinuierlich über die Zeit oder nach einer vorbestimmten Sendungsperiode, zu senden.

10. Elektronisches Bremsanzeigesystem nach einem der vorhergehenden Ansprüche, wobei das mindestens eine Steuermittel (212) eingerichtet ist, die mindestens eine erste elektronische Lichtquelle (208) und/oder die mindestens eine zweite elektronische Lichtquelle (210) auszuschalten, wenn das Fahrzeug eine vorbestimmte Geschwindigkeit erreicht oder überschritten hat,
oder,
wobei das mindestens eine Steuermittel (212) eingerichtet ist, die Aktivierung der mindestens eine erste elektronische Lichtquelle (208) und/oder der mindestens eine zweite elektronische Lichtquelle (210) zu verhindern, wenn das Fahrzeug eine vorbestimmte Geschwindigkeit erreicht oder überschritten hat.

11. Elektronisches Bremsanzeigesystem nach einem der vorhergehenden Ansprüche, wobei die mindestens eine visuelle Signalisierungsvorrichtung (206) jeweilige erste elektronische Lichtquellen (208') und zweite elektronische Lichtquellen (210') für jeden elektromechanischen Aktuator (202') des Fahrzeugs umfasst.

12. Elektronisches Bremsanzeigesystem nach einem der vorhergehenden Ansprüche, wobei die mindestens eine erste elektronische Lichtquelle (208) mindestens eine LED umfasst und/oder die mindestens eine zweite elektronische Lichtquelle (210) mindestens eine LED umfasst.

13. Elektronisches Bremsanzeigesystem nach einem der vorhergehenden Ansprüche, wobei die mindestens eine elektronische visuelle Signalisierungsvorrichtung (206) eine Leiterplatte umfasst, auf der die mindestens eine erste elektronische Lichtquelle (208) und/oder die mindestens eine zweite elektronische Lichtquelle (210) eingebaut sind.

14. Elektronisches Bremsanzeigesystem nach einem der vorhergehenden Ansprüche, umfassend eine Batterie, die eingerichtet ist, der mindestens eine elektronische visuelle Signalisierungsvorrichtung der mindestens eine erste elektronische Lichtquelle und der mindestens eine zweite elektronische Lichtquelle elektrische Energie zu liefern,
oder
wobei die elektronische visuelle Signalisierungsvorrichtung die mindestens eine erste elektronische Lichtquelle und die mindestens eine zweite elektronische Lichtquelle eingerichtet sind, elektrische Energie aus einer Batterie des Fahrzeugs zu empfangen.

15. Fahrzeug, umfassend:
- mindestens einen elektromechanischen Aktuator (202), der eingerichtet ist, eine Bremskraft (F) auf mindestens ein Rad (W) des Fahrzeugs oder auf mindestens ein Bremselement, das mindestens einem Rad (W) des Fahrzeugs zugeordnet ist oder auf eine Achse, an der mindestens ein Rad (W) eingebaut wird, auszuüben;
- ein elektronisches Bremsanzeigesystem nach einem der Ansprüche 1 bis 14.

## Revendications

1. Système électronique d'indication de freinage pour au moins un véhicule, notamment au moins un véhicule ferroviaire, dans lequel ledit véhicule comprend au moins un actionneur électromécanique (202) agencé pour appliquer une force de freinage (F) à au moins une roue (W) du véhicule ou à au moins un élément de freinage associé à au moins une roue (W) du véhicule ou à un essieu sur lequel au moins une roue (W) est montée ;
ledit système électronique d'indication de freinage comprenant :
- au moins un moyen capteur de force (204) agencé pour mesurer une valeur de ladite force de freinage (F) appliquée par ledit au moins un actionneur électromécanique (202) ;
- au moins un dispositif électronique de signalisation visuelle (206), comprenant au moins une première source lumineuse électronique (208) et au moins une seconde source lumineuse électronique (210) ;
- au moins un moyen de commande (212) agencé pour recevoir la valeur mesurée de ladite force de freinage (F) ;
le système électronique d'indication de freinage étant **caractérisé en ce que** ledit au moins un moyen de commande (212) est agencé pour :
a) mettre en marche ladite première source lumineuse électronique (208) lorsque ladite valeur mesurée de la force de freinage (F) est inférieure à un premier seuil (SEUIL 1) ;
b) mettre en marche ladite seconde source lumineuse électronique (210) lorsque ladite valeur mesurée de la force de freinage (F) est supérieure audit premier seuil (SEUIL 1).

2. Système électronique d'indication de freinage pour au moins un véhicule, notamment au moins un véhicule ferroviaire, dans lequel ledit véhicule comprend au moins un actionneur électromécanique (202) agencé pour appliquer une force de freinage (F) à au moins une roue (W) du véhicule ou à au moins un élément de freinage associé à au moins une roue (W) du véhicule ou à un essieu sur lequel au moins une roue (W) est montée ;
ledit système électronique d'indication de freinage comprenant :
- au moins un moyen capteur de force (204) agencé pour mesurer une valeur de ladite force de freinage (F) appliquée par ledit au moins un actionneur électromécanique (202) ;
- au moins un dispositif électronique de signalisation visuelle (206), comprenant au moins une première source lumineuse électronique (208) et au moins une seconde source lumineuse électronique (210) ;
- au moins un moyen de commande (212) agencé pour recevoir la valeur mesurée de ladite force de freinage (F) ;
le système électronique d'indication de freinage étant **caractérisé en ce que** ledit au moins un moyen de commande (212) est agencé pour :
a) mettre en marche ladite première source lumineuse électronique (208) lorsque ladite valeur mesurée de la force de freinage (F) est inférieure ou égale à un premier seuil (SEUIL 1) ;
b) mettre en marche ladite seconde source lumineuse électronique (210) lorsque ladite valeur mesurée de la force de freinage (F) est supérieure ou égale à un second seuil (SEUIL 2) différent dudit premier seuil (SEUIL 1).

3. Système électronique d'indication de freinage selon la revendication 2, dans lequel ledit second seuil (SEUIL 2) est supérieur audit premier seuil (SEUIL 1).

4. Système électronique d'indication de freinage selon l'une quelconque des revendications précédentes, dans lequel ledit au moins un dispositif électronique de signalisation visuelle (206) est agencé pour être installé à l'extérieur du véhicule, de sorte que ladite au moins une première source lumineuse électronique (208) et ladite au moins une seconde source lumineuse électronique (210) soient visibles depuis l'extérieur du véhicule.

5. Système électronique d'indication de freinage selon l'une quelconque des revendications précédentes, dans lequel ladite valeur mesurée de la force de freinage (F) est fournie par ledit au moins un moyen capteur de force (204) audit au moins un moyen de commande (212) via un canal de communication (214).

6. Système électronique d'indication de freinage selon la revendication 5, dans lequel ledit canal de communication est un canal de communication sans fil.

7. Système électronique d'indication de freinage selon l'une quelconque des revendications 5 et 6, comprenant :
- un premier moyen de communication (502) associé audit au moins un moyen capteur de force (204) et agencé pour permettre la transmission/la réception de signaux sur/depuis ledit canal de communication (214) ;
- un second moyen de communication (504) associé audit au moins un moyen de commande (212) et agencé pour permettre la transmission/la réception de signaux sur/depuis ledit canal de communication (214).

8. Système électronique d'indication de freinage selon la revendication 7, dans lequel ledit premier moyen de communication (502) associé audit au moins un moyen capteur de force (204) est agencé pour transmettre un premier signal indicatif de la valeur mesurée de la force de freinage (F) de manière continue dans le temps ou selon une période de transmission prédéterminée.

9. Système électronique d'indication de freinage selon la revendication 7, dans lequel,
lorsque le véhicule circule à une vitesse inférieure ou égale à une vitesse prédéterminée, ledit premier moyen de communication (502) associé audit au moins un moyen capteur de force (204) est agencé pour transmettre au second moyen de communication (504), via ledit canal de communication (214), un premier signal indicatif de la valeur de la force de freinage (F) de manière continue dans le temps ou selon une période de transmission prédéterminée.

10. Système électronique d'indication de freinage selon l'une quelconque des revendications précédentes, dans lequel ledit au moins un moyen de commande (212) est agencé pour éteindre ladite au moins une première source lumineuse électronique (208) et/ou ladite au moins une seconde source lumineuse électronique (210) lorsque le véhicule a atteint ou dépassé une vitesse prédéterminée,
ou,
ledit au moins un moyen de commande (212) est agencé pour empêcher l'activation de ladite au moins une première source lumineuse électronique (208) et/ou de ladite au moins une seconde source lumineuse électronique (210) lorsque le véhicule a atteint ou dépassé une vitesse prédéterminée.

11. Système électronique d'indication de freinage selon l'une quelconque des revendications précédentes, dans lequel ledit au moins un dispositif de signalisation visuelle (206) comprend des premières sources lumineuses électroniques respectives (208') et des secondes sources lumineuses électroniques respectives (210') pour chaque actionneur électromécanique (202') du véhicule.

12. Système électronique d'indication de freinage selon l'une quelconque des revendications précédentes, dans lequel ladite au moins une première source lumineuse électronique (208) comprend au moins une LED et/ou ladite au moins une seconde source lumineuse électronique (210) comprend au moins une LED.

13. Système électronique d'indication de freinage selon l'une quelconque des revendications précédentes, dans lequel ledit au moins un dispositif électronique de signalisation visuelle (206) comprend une carte de circuit sur laquelle ladite au moins une première source lumineuse électronique (208) et/ou ladite au moins une seconde source lumineuse électronique (210) sont installées.

14. Système électronique d'indication de freinage selon l'une quelconque des revendications précédentes, comprenant une batterie agencée pour fournir de l'énergie électrique audit au moins un dispositif électronique de signalisation visuelle, à ladite au moins une première source lumineuse électronique et à ladite au moins une seconde source lumineuse électronique,
ou
dans lequel ledit dispositif électronique de signalisation visuelle, ladite au moins une première source lumineuse électronique et ladite au moins une seconde source lumineuse électronique sont agencés pour recevoir de l'énergie électrique à partir d'une batterie du véhicule.

15. Véhicule comprenant :
- au moins un actionneur électromécanique (202) agencé pour appliquer une force de freinage (F) à au moins une roue (W) du véhicule ou à au moins un élément de freinage associé à au moins une roue (W) du véhicule ou à un essieu sur lequel au moins une roue (W) est montée ;
- un système électronique d'indication de freinage selon l'une quelconque des revendications 1 à 14.
